# EUROPEAN PATENT APPLICATION

(11) **EP 4 455 855 A1**
(43) Date of publication of application: **30.10.2024**
(21) Application number: 23189649.9
(22) Date of filing: 04.08.2023
(51) Int. Cl.: G06F 3/04883, G06F 3/0354

(54) **INFORMATION INPUT METHOD FOR TOUCH DISPLAY SCREEN AND FOR STYLUS, TOUCH DISPLAY SCREEN DEVICE, STYLUS AND STORAGE MEDIUM**

(30) Priority: 28.04.2023 CN 202310487832
(71) Applicant: Beijing Xiaomi Mobile Software Co., Ltd., Beijing 100085 (CN)
(72) Inventor: WANG, Yue, Beijing, 100085 (CN); PAN, Shihhuang, Beijing, 100085 (CN)
(74) Representative: Stöckeler, Ferdinand

(57) **Abstract**

An information input method applied to a touch display screen includes: acquiring a first signal sent by a stylus, in which the first signal carries first status information configured to indicate whether a tip of the stylus is in contact with the touch display screen; and displaying a stroke on the touch display screen under a condition that the first status information indicates a first status where the tip of the stylus is in a contact status with the touch display screen. An information input method applied to a stylus includes entering an activated state in response to a signal sent by a touch display screen, sending the first signal, and sending a second signal, wherein the second signal carries a tip pressure value of the stylus, wherein the first signal and the second signal are configured to instruct the touch display screen to display a stroke.

## Description

### FIELD

The present invention relates to the field of information input technology, in particular to an information input method for a touch display screen and for a stylus, a touch display screen device, a stylus and a storage medium.

### BACKGROUND

With the development of touch technology, more and more electronic devices are implementing a touch mode for human-computer interaction. Users can operate a touch display screen of an electronic apparatus through a stylus to provide input to the electronic apparatus, and the electronic apparatus performs corresponding operations based on the input of the stylus. The electronic apparatus can display strokes of the stylus on the touch display screen based on a pressure signal of a tip of the stylus and a downlink signal from the stylus, to realize operations, such as writing and drawing on the touch display screen, using the stylus.

In the related art, the touch display screen of the electronic apparatus displays the strokes of the stylus in a low response speed and low control accuracy, and the stylus is prone to ink leakage, disconnection, and tailing, which leads to poor user experience.

### SUMMARY

In order to overcome the problems existing in the related art, the invention provides an information input method applied to a touch display screen according to claim 1, an information input method applied to a stylus according to claim 11, a touch display screen device according to claim 13, a stylus according to claim 14 and a computer-readable storage medium according to claim 15. Further developments of the invention are defined in the dependent claims.

According to a first aspect of the present invention, embodiments of the present invention provide an information input method applied to a touch display screen of an electronic apparatus. The information input method includes: acquiring a first signal sent by a stylus, wherein the first signal carries first status information, and the first status information is configured to indicate whether a tip of the stylus is in contact with the touch display screen; and displaying a stroke on the touch display screen under a condition that the first status information indicates a first status, the first status being that the tip of the stylus is in a contact status with the touch display screen.

Optionally, displaying a stroke on the touch display screen under a condition that the first status information indicates a first status includes: displaying the stroke on the touch display screen according to a preset pressure value when it is detected that the first status information indicates the first status.

Optionally, displaying a stroke on the touch display screen under a condition that the first status information indicates a first status includes: displaying the stroke on the touch display screen, when the number of information frames of the first status information indicating the first status in the first signal is greater than or equal to a frame number threshold.

Optionally, the information input method further includes: acquiring a stylus sensing amount according to the first signal, wherein the stylus sensing amount is configured to reflect a degree of contact between the stylus and the touch display screen; and displaying a stroke on the touch display screen under a condition that the first status information indicates a first status includes: displaying the stroke on the touch display screen when the stylus sensing amount is greater than or equal to a sensing threshold, under the condition that the first status information indicates the first status.

Optionally, the information input method further includes: acquiring a second signal sent by the stylus, wherein the second signal carries a tip pressure value of the stylus; and displaying the stroke on the touch display screen according to the first signal and the second signal.

Optionally, displaying the stroke on the touch display screen according to the first signal and the second signal includes: displaying the stroke on the touch display screen and determining a width of the stroke according to the tip pressure value, under a condition that the tip pressure value is greater than zero.

Optionally, displaying the stroke on the touch display screen under a condition that the tip pressure value is greater than zero includes: stopping displaying the stroke on the touch display screen when the number of information frames of the first status information indicating a second status in the first signal is greater than or equal to a frame number threshold, under the condition that the tip pressure value is greater than zero.

Optionally, displaying the stroke on the touch display screen under the condition that the first status information indicates the first status includes: stopping displaying the stroke on the touch display screen when the stylus sensing amount is greater than or equal to the sensing threshold, under the condition that the first status information indicates the first status.

Optionally, the first status information indicates pressure status information of the tip of the stylus.

Optionally, the first signal further includes second status information that indicates coordinate coding information of the stylus. Before displaying the stroke on the touch display screen, the information input method further includes: acquiring the coordinate coding information in the first signal; acquiring a contact coordinate of the stylus on the touch display screen according to the coordinate coding information; stopping displaying the stroke on the touch display screen in the event of failure in acquiring the contact coordinate; and performing an operation of displaying the stroke on the touch display screen under the condition that the first status information indicates the first status, in the event of successful acquisition of the contact coordinate.

According to a second aspect of the present invention, embodiments of the present invention provide an information input method applied to a stylus. The information input method includes: entering an activated state in response to a signal sent by a touch display screen; sending a first signal, wherein the first signal includes first status information, and the first status information is configured to indicate whether a tip of the stylus is in contact with the touch display screen; and sending a second signal, wherein the second signal carries a tip pressure value of the stylus, wherein the first signal and the second signal are configured to instruct the touch display screen to display a stroke.

Optionally, the second signal is transmitted by short-range wireless communication.

According to a third aspect of the present invention, embodiments of the present invention provide a touch display screen device. The touch display screen device includes: a touch display screen; a memory having a computer program stored therein; and a processor configured to execute the computer program in the memory, to realize the information input method according to any one of embodiments of the first aspect.

According to a fourth aspect of the present invention, embodiments of the present invention provide a stylus. The stylus includes: a memory having a computer program stored therein; and a processor configured to execute the computer program in the memory, to realize the information input method according to any one of embodiments of the second aspect.

According to a fifth aspect of the present invention, embodiments of the present invention provide a computer-readable storage medium having stored therein program instructions that, when executed by a processor, realize the information input method according to any one of embodiments of the first aspect or realizes the information input method according to any one of embodiments of the second aspect.

To sum up, embodiments of the present invention provide an information input method applied to a touch display screen of an electronic apparatus. The method includes: acquiring a first signal sent by a stylus, in which the first signal carries first status information, and the first status information is configured to indicate whether a tip of the stylus is in contact with the touch display screen; and displaying a stroke on the touch display screen under a condition that the first status information indicates a first status. Since the first signal carries the first status information, the touch display screen can display the stroke according to the state of the first status information. As a result, the embodiments of the present invention can reduce ink leakage, disconnection and tailing of the stylus, enhance the response sensitivity and accuracy of the stylus, and improve the user experience.

It should be understood that both the foregoing general description and the following detailed description are only exemplary and explanatory and do not limit the present invention.

### BRIEF DESCRIPTION OF DRAWINGS

The accompanying drawings, which are incorporated in and constitute a part of this specification, illustrate embodiments consistent with the present invention and together with the specification, serve to explain principles of the present invention.
Fig. 1 is a schematic diagram of interaction between a touch display screen device and a stylus, according to an embodiment of the present invention;
Fig. 2 is a flowchart of an information input method applied to a touch display screen device, according to an embodiment of the present invention;
Fig. 3 is a flowchart of an information input method according to an embodiment of the present invention;
Fig. 4 is a flowchart of an information input method according to an embodiment of the present invention;
Fig. 5 is a flowchart of an information input method according to an embodiment of the present invention;
Fig. 6 is a flowchart of an information input method according to an embodiment of the present invention;
Fig. 7 is a flowchart of an information input method according to an embodiment of the present invention;
Fig. 8 is a flowchart of an information input method according to an embodiment of the present invention;
Fig. 9 is a flowchart of an information input method according to an embodiment of the present invention;
Fig. 10 is a flowchart of an information input method according to an embodiment of the present invention;
Fig. 11 is a flowchart of an information input method applied to a stylus, according to an embodiment of the present invention;
Fig. 12 is a block diagram of an information input device including a touch display screen according to an embodiment of the present invention;
Fig. 13 is a block diagram of an information input device implemented as a stylus according to an embodiment of the present invention;
Fig. 14 is a block diagram of a touch display screen device according to an embodiment of the present invention;
Fig. 15 is a block diagram of a stylus device according to an embodiment of the present invention.

### DETAILED DESCRIPTION

Embodiments of the present invention will be described in detail and examples thereof will be shown in the drawings. The following description refers to the accompanying drawings in which the same numbers in different drawings represent the same or similar elements unless otherwise represented. Implementations set forth in the following description of the embodiments do not represent all possible implementations consistent with the present invention. Instead, they are merely examples of devices and methods consistent with aspects of the present invention as recited in the appended claims.

It should be understood that the term "including" and its variations used herein are open-ended, meaning "including but not limited to". The term "based on" means "at least partially based on". The term "one embodiment" means "at least one embodiment". The term "another embodiment" means "at least one other embodiment". The term "some embodiments" means "at least some embodiments". Relevant definitions of other terms will be given in the following description.

It should be noted that terms such as "first" and "second" in the present invention are only used to distinguish different devices, modules, or units, and are not intended to limit the sequence or interdependence of functions performed by these devices, modules, or units. Modifiers "a" and "a plurality" in the present invention are indicative rather than restrictive, and those skilled in the art should understand that the modifiers mean "one or more" unless clearly specified otherwise. In the description of the present invention, unless otherwise specified, the term "a plurality of" means two or more, similar to other quantifiers; the terms "at least one item", "one or more items" or similar expressions refer to any combination of these items, including a single item or any combination of plural items.

In the embodiments of the present invention, although operations or steps are described in a specific order in the drawings, it should not be understood as requiring execution of these operations or steps in the specific order or serial order shown, or requiring execution of all the operations or steps shown to obtain a desired result. In the embodiments of the present invention, these operations or steps may be performed in series or in parallel; or some of these operations or steps may be performed.

In the embodiments of the present invention, names of messages or information exchanged among a plurality of devices are only used for illustrative purposes, and are not intended to limit the scope of these messages or information. It can be understood that before the technical solutions disclosed in various embodiments of the present invention are used, in accordance with relevant laws and regulations, users should be informed of and give authorization to the type, scope of use, usage scenarios and so on about personal information involved in the present invention in an appropriate manner. The present invention will be described below with reference to specific embodiments.

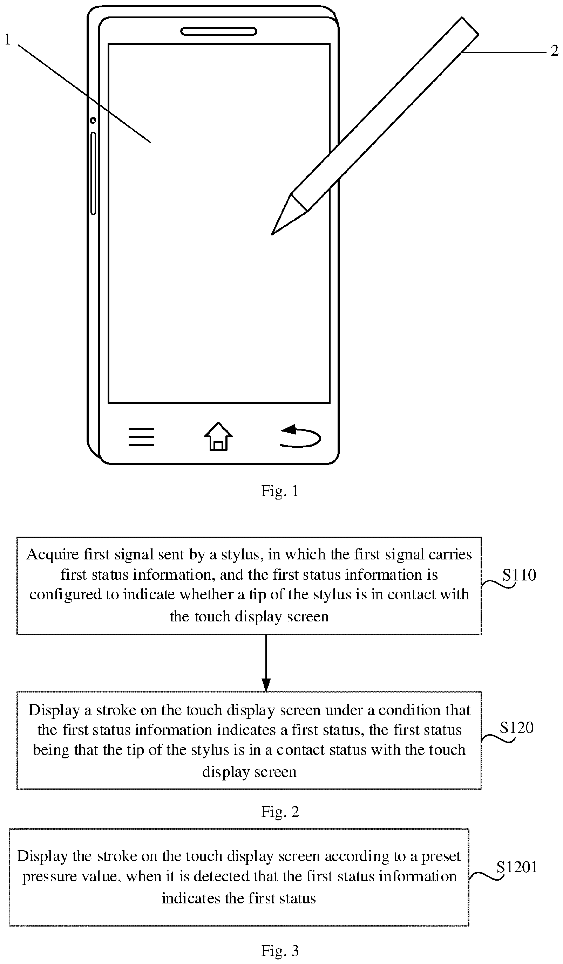

An application scenario of the present invention is first explained. Fig. 1 is a schematic diagram of an implementation scenario to which an embodiment of the present invention is applicable. As shown in Fig. 1, the implementation scenario can include at least one touch display screen and at least one stylus. The phrase "at least one" can be understood as one or more in various embodiments of the present invention. An example where one touch display screen and one stylus exist is used to explain the implementation scenario of the present invention. Referring to Fig. 1, the touch display screen is denoted as a touch display screen 1, the stylus is denoted as a stylus 2, and the touch display screen 1 is in communication connection with the stylus 2. The touch display screen 1 and the stylus 2 form an electronic apparatus. The electronic apparatus adopts a touch mode for human-computer interaction. A user can operate the touch display screen of the electronic apparatus through the stylus to provide input to the electronic apparatus, and the electronic apparatus performs a corresponding operation based on the input of the stylus. The electronic apparatus can display strokes of the stylus on the touch display screen based on a pressure signal of a tip of the stylus and a downlink signal from the stylus, to realize operations, such as writing and drawing on the touch display screen, using the stylus.

At present, in conventional stylus protocols (such as WGP, USI, MPP, etc.), a first signal of the stylus needs to transmit data such as coordinates and pressure simultaneously, which causes too much information to be transmitted in the first signal. The coding time for coordinates and pressure is not long enough, the signal-to-noise ratio of the coded signal is not high enough, and the anti-interference ability is poor. Consequently, some manufacturers have formulated a new stylus protocol that uses Bluetooth signals to transmit pressure data, but the Bluetooth signals may have a certain delay. In order to prevent ink leakage, before physically touching the touch display screen, the stylus will come into contact (it can be understood that the word "contact" in the embodiments of the present invention refers to an operation of drawing strokes of the stylus on the touch display screen) to display the strokes of the stylus. Therefore, a commonly used logic for determining display of the strokes is that a touch chip of the touch display screen has reported a coordinate and the pressure which is not zero at the same time. Consequently, the transmission of pressure values through the Bluetooth signals may make the delay of the stylus longer, and there will be a delay even in a case of no contact, that is, even though the stylus has left the touch display screen, the handwriting will continue for some time, forming a tailing phenomenon.

Fig. 2 is a flowchart of an information input method according to an embodiment of the present invention. This embodiment is illustrated by applying the information input method to a touch display screen that may be the touch display screen 1 in the implementation scenario shown in Fig. 1. Referring to Fig. 2, the information input method includes the following steps.

In step S110, a first signal sent by a stylus is acquired, in which the first signal carries first status information, and the first status information is configured to indicate whether a tip of the stylus is in contact with the touch display screen.

In this step, the touch display screen 1 acquires the first signal, which may be a downlink signal, sent by the stylus 2; the first signal sent by the stylus 2 includes the first status information of the stylus 2; and the first status information is configured to indicate whether the tip of the stylus 2 is in contact with the touch display screen 1, for example whether they are in a non-contact status or in a contact status. For example, by coding, "0" represents the non-contact status and "1" represents the contact status. For instance, when a tip pressure value fed back by a pressure sensor of the stylus 2 is greater than zero, the first status information is coded as "1" (i.e., first target status information, which indicates a first status, that is, the tip of the stylus 2 is in the contact status with the touch display screen 1); and when the tip pressure value fed back by the pressure sensor of the stylus is equal to zero, the first status information is coded as "0" (i.e., second target status information, which indicates a second status, that is, the tip of the stylus 2 is in the non-contact status with the touch display screen 1).

In some embodiments, the first signal is an electric field signal emitted by the stylus 2. In some embodiments, the first signal is transmitted to the touch display screen 1 through coupling capacitance between the tip of the stylus 2 and the touch display screen 1.

In step S120, a stroke is displayed on the touch display screen under a condition that the first status information indicates a first status.

In this step, the stroke is displayed on the touch display screen 1 when the touch display screen 1 detects that the first status information in the first signal sent by the stylus 2 indicates the first status (that is, the tip pressure value fed back by the pressure sensor of the stylus 2 is greater than zero).

To sum up, embodiments of the present invention provide an information input method applied to a touch display screen of an electronic apparatus. The method includes: acquiring a first signal sent by a stylus, in which the first signal carries first status information, and the first status information is configured to indicate whether a tip of the stylus is in contact with the touch display screen; and displaying a stroke on the touch display screen under a condition that the first status information indicates a first status. Since the first signal carries the first status information, the touch display screen can display the stroke according to the state of the first status information. As a result, the embodiments of the present invention can reduce ink leakage, disconnection and tailing of the stylus, enhance the response sensitivity and accuracy of the stylus, and improve the user experience.

Fig. 3 is a flowchart of an information input method according to an embodiment of the present invention. This embodiment is illustrated by applying the information input method to a touch display screen that may be the touch display screen 1 in the implementation scenario shown in Fig. 1. Referring to Fig. 3, the information input method includes the following step.

In step S 1201, when it is detected that the first status information indicates the first status, the stroke is displayed on the touch display screen according to a preset pressure value.

In this step, at a first stroke, the touch display screen 1 detects a status flag of the first status information according to the received first signal sent by the stylus 2. When the status flag is in the first status (at this time, the tip pressure value fed back by the pressure sensor of the stylus 2 is greater than zero), a touch chip of the touch display screen 1 displays the stroke on the touch display screen 1 according to the preset pressure value. For example, the preset pressure value is a pressure value for displaying a stroke of default thickness. It can be understood that when the status flag is in the second status (at this time, the tip pressure value fed back by the pressure sensor of the stylus 2 is equal to zero), no stroke is displayed on the touch display screen 1. This method can reduce ink leakage and improve the sensitivity and control accuracy of the stylus.

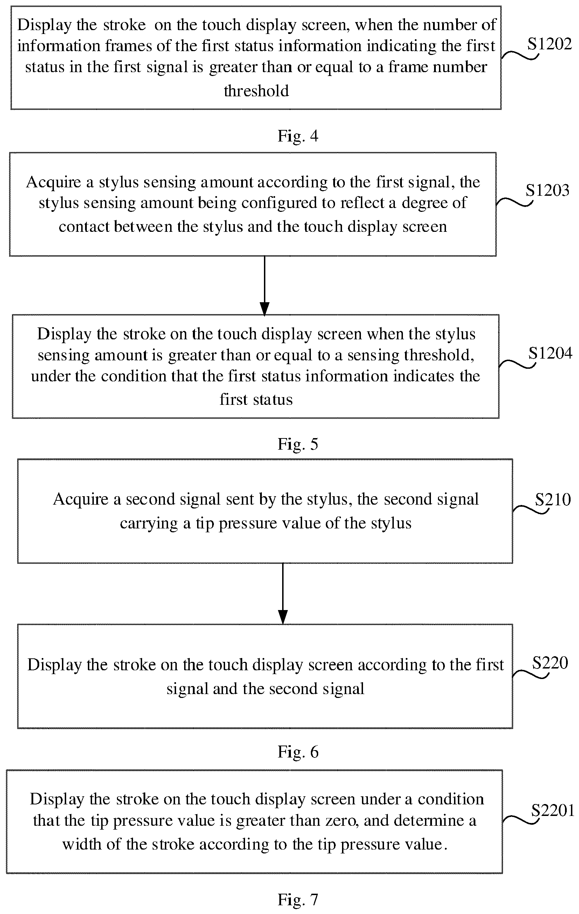

Fig. 4 is a flowchart of an information input method according to an embodiment of the present invention. This embodiment is illustrated by applying the information input method to a touch display screen that may be the touch display screen 1 in the implementation scenario shown in Fig. 1. Referring to Fig. 4, the information input method includes the following step.

In step S1202, in the first signal, when the number of information frames of the first status information indicating the first status is greater than or equal to a frame number threshold, the stroke is displayed on the touch display screen.

In this step, the stroke is displayed on the touch display screen 1, when the touch display screen 1 detects that the number of information frames of the first status information indicating the first status in the first signal sent by the stylus 2 is greater than or equal to the frame number threshold. For example, the frame number threshold may be 3 frames. That is, the stroke is displayed on the touch display screen 1, when the touch display screen 1 detects that the number of information frames of the first status information coded as "1" in the first signal is greater than or equal to three. Since the first signal is susceptible to external interference, bit errors may be caused and wrong first status information codes may be provided. That is, the stroke is not displayed when the stroke is supposed to be displayed, but is instead displayed when the stroke is not supposed to be displayed. Therefore, this method can further reduce the occurrence of ink leakage (i.e., displaying strokes even without tip contact).

It can be understood that the term "information frame", usually referred to as I frame, is used to transmit valid information or data. The high-level data link control (HDLC) procedure defined by the International Organization for Standardization ISO divides frame types into three categories, namely, I frame (information frame): carrying upper layer information and some control information; S frame (monitoring frame): carrying control information; U frame (frame without sequence number): carrying control information. The functions of the information frame include sequencing, flow control, error detection and recovery. The information frame carries the sequence number for sending and receiving.

Fig. 5 is a flowchart of an information input method according to an embodiment of the present invention. This embodiment is illustrated by applying the information input method to a touch display screen that may be the touch display screen 1 in the implementation scenario shown in Fig. 1. Referring to Fig. 5, the information input method includes the following steps.

In step S 1203, a stylus sensing amount is acquired according to the first signal, the stylus sensing amount being configured to reflect a degree of contact between the stylus and the touch display screen.

In this step, the touch chip of the touch display screen 1 acquires the stylus sensing amount according to the first signal, and the stylus sensing amount is configured to reflect the degree of contact between the stylus 2 and the touch display screen 1.

In step S 1204, under the condition that the first status information indicates the first status, the stroke is displayed on the touch display screen when the stylus sensing amount is greater than or equal to a sensing threshold.

In this step, under the condition that the first status information indicates the first status, the stroke is displayed on the touch display screen 1, when the touch chip of the touch display screen 1 detects that the stylus sensing amount is greater than or equal to the sensing threshold, which may be for example half of a maximum sensing capacity change detected by the touch chip. In such a case, it is judged whether the touch display screen 1 displays the stroke based on two conditions that the first status information indicates the first status and that the current stylus sensing amount is greater than or equal to the sensing threshold, which can reduce misjudgment about stroke display. This method can further prevent ink leakage and improve the sensitivity and control accuracy of the stylus.

Fig. 6 is a flowchart of an information input method according to an embodiment of the present invention. This embodiment is illustrated by applying the information input method to a touch display screen that may be the touch display screen 1 in the implementation scenario shown in Fig. 1. Referring to Fig. 6, the information input method includes the following steps.

In step S210, a second signal sent by the stylus is acquired, and the second signal carries a tip pressure value of the stylus.

In this step, the touch display screen 1 acquires the second signal sent by the stylus 2, which carries the tip pressure value of the stylus 2. For example, the second signal is a tip pressure value signal about the stylus 2 sent via Bluetooth. The second signal has a stronger anti-interference ability than the first signal.

In step S220, the stroke is displayed on the touch display screen according to the first signal and the second signal.

In this step, the touch display screen 1 displays the stroke on the touch display screen 1 according to the first signal and the second signal. Since the first status information in the first signal and the tip pressure value of the stylus 2 in the second signal are combined to jointly judge whether to display the stroke on the touch display screen 1, this method can prevent the occurrence of disconnection and improve the sensitivity and control accuracy of the stylus.

It should be noted that the ordinal words "first" and "second" in the first signal and the second signal do not indicate or imply a specific order but are only used to distinguish the first signal from the second signal.

Fig. 7 is a flowchart of an information input method according to an embodiment of the present invention. This embodiment is illustrated by applying the information input method to a touch display screen that may be the touch display screen 1 in the implementation scenario shown in Fig. 1. Referring to Fig. 7, the information input method includes the following step.

In step S2201, under a condition that the tip pressure value is greater than zero, the stroke is displayed on the touch display screen, and a width of the stroke is determined according to the tip pressure value.

In this step, when the touch chip of the touch display screen 1 detects that the tip pressure value of the second signal is greater than zero, the stroke is displayed on the touch display screen 1, regardless of the first status information of the first signal, since the second signal is more reliable due its stronger anti-interference ability than the first signal. In such a way, the occurrence of disconnection can be prevented. In addition, the touch chip of the touch display screen 1 can also determine the width of the stroke of the stylus 2 according to the tip pressure value of the second signal. The higher the tip pressure value is, the greater the width of the stroke is; or the lower the tip pressure value is, the smaller the width of the stroke is. In such a way, the user experience can be improved.

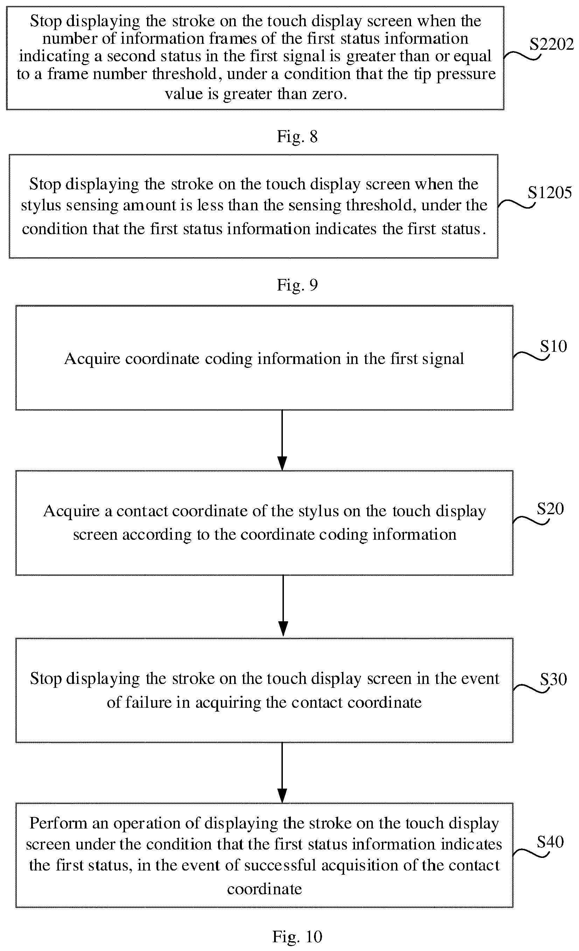

Fig. 8 is a flowchart of an information input method according to an embodiment of the present invention. This embodiment is illustrated by applying the information input method to a touch display screen that may be the touch display screen 1 in the implementation scenario shown in Fig. 1. Referring to Fig. 8, the information input method includes the following step.

In step S2202, under a condition that the tip pressure value is greater than zero, in the first signal, when the number of information frames of the first status information indicating a second status is greater than or equal to a frame number threshold, the display of the stroke on the touch display screen is stopped.

In this step, the display of the stroke on the touch display screen 1 is stopped, when the touch display screen 1 detects that the number of information frames of the first status information indicating the second status in the first signal sent by the stylus 2 is greater than or equal to the frame number threshold. For example, the frame number threshold may be 3 frames. That is, the display of the stroke on the touch display screen 1 is stopped, when the touch display screen 1 detects that the number of information frames of the first status information coded as "0" in the first signal is greater than or equal to three. Due to the possibility of delay in the second signal, the tip pressure value may not be updated in time, and the display of the stroke continues when the user has already lifted the stylus, which causes the tailing phenomenon. Therefore, the method in which the display of the stroke on the touch display screen 1 is stopped when the number of information frames of the first status information coded as "0" in the first signal is greater than or equal to three can reduce the tailing phenomenon, enhance the sensitivity and control accuracy of the stylus and improve the user experience.

Fig. 9 is a flowchart of an information input method according to an embodiment of the present invention. This embodiment is illustrated by applying the information input method to a touch display screen that may be the touch display screen 1 in the implementation scenario shown in Fig. 1. Referring to Fig. 9, the information input method includes the following step.

In step S 1205, under the condition that the first status information indicates the first status, the display of the stroke on the touch display screen is stopped when the stylus sensing amount is less than the sensing threshold.

In this step, under the condition that the first status information indicates the first status, the display of the stroke on the touch display screen 1 is stopped, when the touch chip of the touch display screen 1 detects that the stylus sensing amount is less than the sensing threshold, which may be for example half of a maximum sensing capacity change detected by the touch chip. Due to the higher reliability of the stylus sensing amount compared to the first status information in the first signal, it is judged whether the user has lifted the stylus and whether the display of the stroke on the touch display screen 1 is to be stopped based on the stylus sensing amount, even though the first status information indicates the first status at this time. This method can further prevent the tailing phenomenon and improve the sensitivity and control accuracy of the stylus.

In some embodiments, the first status information may be pressure status information of the tip of the stylus. The tip of the stylus 2 with pressure indicates a contact status, and the tip of the stylus 2 without pressure indicates a non-contact status.

Fig. 10 is a flowchart of an information input method according to an embodiment of the present invention. This embodiment is illustrated by applying the information input method to a touch display screen that may be the touch display screen 1 in the implementation scenario shown in Fig. 1. Referring to Fig. 10, in some embodiments, the first signal further includes second status information that is coordinate coding information of the stylus 2. Before displaying the stroke on the touch display screen 1, the method may further include the following steps.

In step S10, the coordinate coding information in the first signal is acquired.

In this step, the touch display screen 1 acquires the coordinate coding information in the first signal sent by the stylus 2.

In step S20, a contact coordinate of the stylus on the touch display screen is acquired according to the coordinate coding information.

In this step, the touch display screen 1 acquires the contact coordinate of the stylus 2 on the touch display screen 1 according to the coordinate coding information.

In step S30, in the event of failure in acquiring the contact coordinate, the display of the stroke on the touch display screen is stopped.

In this step, the touch display screen 1 stops displaying the stroke on the touch display screen 1 in the event of failure in acquiring the contact coordinate.

In step S40, an operation of displaying the stroke on the touch display screen under the condition that the first status information indicates the first status is performed, in the event of successful acquisition of the contact coordinate.

In this step, when the touch display screen 1 acquires the contact coordinate successfully, the operation of displaying the stroke on the touch display screen 1 under the condition that the first status information indicates the first status is performed.

To sum up, embodiments of the present invention provide the information input method applied to the touch display screen of the electronic apparatus. Since a judgment condition of whether the contact coordinate is acquired successfully is added before the stroke is displayed on the touch display screen, the embodiments of the present invention can further reduce the occurrence of ink leakage, improve the response accuracy of the stylus and enhance the user experience.

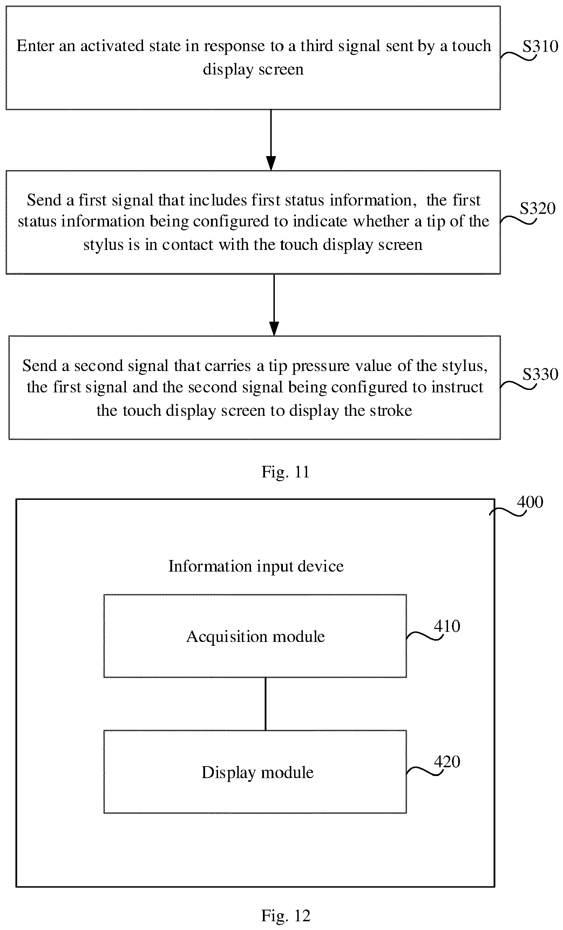

Fig. 11 is a flowchart of an information input method according to an embodiment of the present invention. This embodiment is illustrated by applying the information input method to a stylus that may be the stylus 2 in the implementation scenario shown in Fig. 1. Referring to Fig. 11, the information input method includes the following step.

In step S310, an activated state is entered in response to a signal sent by a touch display screen.

In this step, the stylus 2 enters the activated state in response to the signal sent by the touch display screen 1. Moreover, the signal sent by the touch display screen 1 may be called a third signal, and the ordinal word "third" does not indicate or imply a specific order but is only used to distinguish this signal from first and second signals described above or below. For example, the third signal may be an uplink signal, and the activated state indicates that the stylus 2 enters the activated state from a sleep state and is able to transmit signals.

In some embodiments, the third signal is an electric field signal emitted by the touch display screen 1. In some embodiments, the third signal is transmitted to the stylus 2 through coupling capacitance between the tip of the stylus 2 and the touch display screen 1.

In step S320, a first signal is sent, which includes first status information, and the first status information is configured to indicate whether a tip of the stylus is in contact with the touch display screen.

In this step, the stylus 2 sends the first signal that carries the first status information, and the first status information is configured to indicate whether the tip of the stylus is in contact with the touch display screen, for example, whether they are in a non-contact status or in a contact status. For example, the first status information may be pressure status information of the tip of the stylus, which corresponds to a pressure state of the tip of the stylus, such as status information indicating that the tip of the stylus is under pressure and status information indicating that the tip of the stylus is not under pressure.

In some embodiments, the first signal is an electric field signal emitted by the stylus 2. In some embodiments, the first signal is transmitted to the touch display screen 1 through coupling capacitance between the tip of the stylus 2 and the touch display screen 1.

In step S330, a second signal is sent, which carries a tip pressure value of the stylus, and the first signal and the second signal are configured to instruct the touch display screen to display the stroke.

In this step, the stylus 2 sends the second signal that carries the tip pressure value of the stylus 2, and the first signal and the second signal are configured to instruct the touch display screen 1 to display the stroke.

In some embodiments, the second signal may be transmitted through short-range wireless communication. For example, the short-range wireless communication may be Bluetooth, NFC, UWB, Zigbee and other communication modes.

To sum up, embodiments of the present invention provide the information input method applied to the stylus of the electronic apparatus. The method includes: entering an activated state in response to a signal sent by a touch display screen; sending a first signal that includes first status information, the first status information being configured to indicate whether a tip of the stylus is in contact with the touch display screen; sending a second signal that carries a tip pressure value of the stylus, the first signal and the second signal being configured to instruct the touch display screen to display the stroke. Due to a strategy of determining the display of the stroke on the touch display screen based on the first signal and the second signal, embodiments of the present invention can reduce phenomena of ink leakage, disconnection and tailing of the stylus, enhance the response sensitivity and accuracy of the stylus, and improve the user experience.

Fig. 12 is a block diagram of an information input device 400 according to an embodiment of the present invention. The information input device 400 can be realized as a part of a touch display screen device or a complete touch display screen device by software, hardware or a combination of both. The touch display screen device may be the touch display screen 1 in the implementation scenario shown in Fig. 1. Referring to Fig. 12, the information input device 400 includes: an acquisition module 410 configured to acquire a first signal sent by a stylus, in which the first signal carries first status information, and the first status information is configured to indicate whether a tip of the stylus is in contact with the touch display screen; and a display module 420 configured to display a stroke on the touch display screen under a condition that the first status information indicates a first status.

Optionally, the display module 420 is further configured to display the stroke on the touch display screen according to a preset pressure value when detecting that the first status information indicates the first status.

Optionally, the display module 420 is further configured to display the stroke on the touch display screen when the number of frames of the first status information indicating the first status in the first signal is greater than or equal to a frame number threshold.

Optionally, the acquisition module 410 further includes a first acquisition sub-module configured to acquire a stylus sensing amount according to the first signal, and the stylus sensing amount is configured to reflect a degree of contact between the stylus and the touch display screen. The display module 420 is further configured to display the stroke on the touch display screen when the stylus sensing amount is greater than or equal to a sensing threshold, under the condition that the first status information indicates the first status.

Optionally, the acquisition module 410 further includes a second acquisition sub-module configured to acquire a second signal sent by the stylus, and the second signal carries a tip pressure value of the stylus. The display module 420 further includes a first display sub-module configured to display the stroke on the touch display screen according to the first signal and the second signal.

Optionally, the first display sub-module is also configured to display the stroke on the touch display screen and determine a width of the stroke according to the tip pressure value, when the tip pressure value is greater than zero.

Optionally, the first display sub-module is further configured to stop displaying the stroke on the touch display screen, when the tip pressure value is greater than zero and the number of information frames of the first status information indicating the second status in the first signal is greater than or equal to the frame number threshold.

Optionally, the display module 420 is further configured to stop displaying the stroke on the touch display screen when the stylus sensing amount is less than the sensing threshold, under the condition that the first status information indicates the first status.

Optionally, the first status information is pressure status information of the tip of the stylus.

Optionally, the first signal further includes second status information that is coordinate coding information of the stylus. Before displaying the stroke on the touch display screen, the acquisition module 410 is configured to: acquire the coordinate coding information in the first signal; acquire a contact coordinate of the stylus on the touch display screen according to the coordinate coding information; stop displaying the stroke on the touch display screen in the event of failure in acquiring the contact coordinate; and perform an operation of displaying the stroke on the touch display screen under the condition that the first status information indicates the first status, in the event of successful acquisition of the contact coordinate.

To sum up, embodiments of the present invention provide an information input device applied to a touch display screen of an electronic apparatus. The device includes: an acquisition module configured to acquire a first signal sent by a stylus, in which the first signal carries first status information, and the first status information is configured to indicate whether a tip of the stylus is in contact with the touch display screen; and a display module configured to display a stroke on the touch display screen under a condition that the first status information indicates a first status. The embodiments of the present invention can reduce phenomena of ink leakage, disconnection and tailing of the stylus, enhance the response sensitivity and accuracy of the stylus, and improve the user experience.

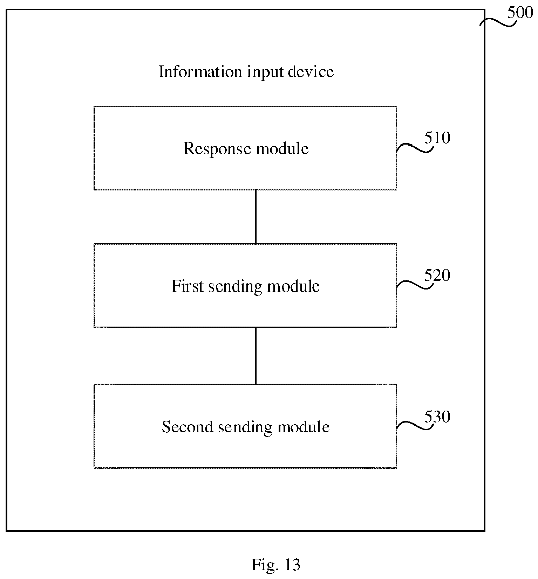

Fig. 13 is a block diagram of an information input device 500 according to an embodiment of the present invention. The information input device 500 can be realized as a part of a stylus device or a complete stylus device by software, hardware or a combination of the both. The stylus device may be the stylus 2 in the implementation scenario shown in Fig. 1. Referring to Fig. 13, the information input device 500 includes: a response module 510 configured to enter an activated state in response to a signal sent by a touch display screen; a first sending module 520 configured to send a first signal, in which the first signal includes first status information, and the first status information is configured to indicate whether a tip of the stylus is in contact with the touch display screen; and a second sending module 530 configured to send a second signal that carries a tip pressure value of the stylus, in which the first signal and the second signal are configured to instruct the touch display screen to display a stroke.

Optionally, the second sending module is configured to transmit the second signal through short-range wireless communication.

To sum up, embodiments of the present invention provide an information input device that is applied to a stylus of an electronic apparatus. The device includes: a response module configured to enter an activated state in response to a signal sent by a touch display screen; a first sending module configured to send a first signal, in which the first signal includes first status information, and the first status information is configured to indicate whether a tip of the stylus is in contact with the touch display screen; and a second sending module configured to send a second signal that carries a tip pressure value of the stylus, in which the first signal and the second signal are configured to instruct the touch display screen to display a stroke. The embodiments of the present invention can reduce phenomena of ink leakage, disconnection and tailing of the stylus, enhance the response sensitivity and accuracy of the stylus, and improve the user experience.

With regard to the devices in the above embodiments, the specific way in which each module performs operations has been described in detail in the embodiments related to the method, and will not be described in detail here.

The present invention also provides a computer-readable storage medium having stored therein instructions that, when executed by a processor, realizes the steps of the information input method according to the present invention.

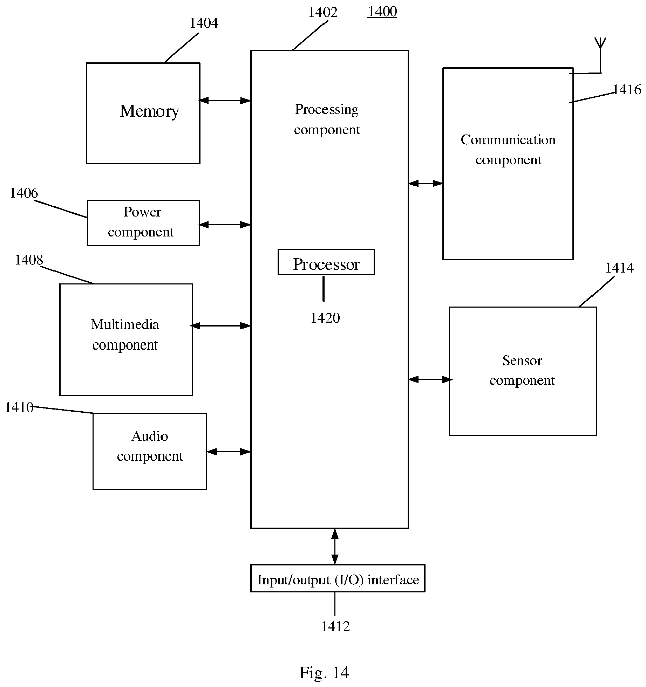

Fig. 14 is a block diagram of a touch display screen device 1400 according to an embodiment of the present invention. For example, the touch display screen device 1400 may be a mobile phone, a computer, a digital broadcast terminal, a messaging device, a gaming console, a tablet, a medical device, exercise equipment, a personal digital assistant and the like.

Referring to Fig. 14, the touch display screen device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the touch display screen device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the touch display screen device 1400. Examples of such data include instructions for any applications or methods operated on the touch display screen device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the touch display screen device 1400. The power component 1406 may include a power management system, one or more power sources, and any other components associated with the generation, management, and distribution of power in the touch display screen device 1400.

The multimedia component 1408 includes a screen providing an output interface between the touch display screen device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the touch display screen device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the touch display screen device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a security keyboard, a click wheel, buttons, and the like. The buttons may include, but are not limited to, a home button, a volume button, a starting button, and a locking button.

The sensor component 1414 includes one or more sensors to provide status assessments of various aspects of the touch display screen device 1400. For instance, the sensor component 1414 may detect an open/closed status of the touch display screen device 1400, relative positioning of components, e.g., the display and the security keypad, of the touch display screen device 1400, a change in position of the touch display screen device 1400 or a component of the touch display screen device 1400, a presence or absence of user contact with the touch display screen device 1400, an orientation or an acceleration/deceleration of the touch display screen device 1400, and a change in temperature of the touch display screen device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the touch display screen device 1400 and other devices. The touch display screen device 1400 can access a wireless network based on a communication standard, such as Wi-Fi, 2G, 3G, 4G, 5G or a combination thereof. In an embodiment, the communication component 1416 receives a broadcast signal or broadcast associated information from an external broadcast management system via a broadcast channel. In an embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the touch display screen device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 1404, executable by the processor 1420 in the touch display screen device 1400, for performing the above-described methods. For example, the non-transitory computer-readable storage medium may be a ROM, a RAM, a CD-ROM, a magnetic tape, a floppy disc, an optical data storage device, and the like.

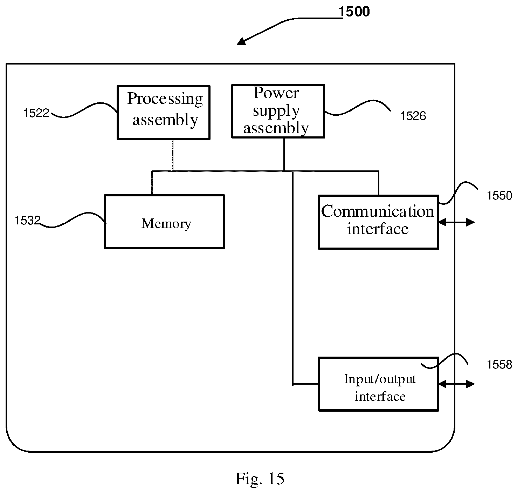

Fig. 15 is a block diagram of a stylus device 1500 according to an embodiment of the present invention. For example, the stylus device 1500 is provided as the stylus 2. Referring to Fig. 15, the stylus device 1500 includes: a processing assembly 1522 that includes one or more processors; and a memory resource represented by a memory 1532 configured to store instructions, e.g., application programs, executable by the processing assembly 1522. The application programs stored in the memory 1532 may include one or more modules each corresponding to a set of instructions. In addition, the processing assembly 1522 is configured to execute instructions to perform the information input method described above.

The stylus device 1500 may further include: a power supply assembly 1526 configured to perform power management of the stylus device 1500; a wireless communication interface 1550 configured for communication connection between the stylus device 1500 and the touch display screen device 1500; and an input/output interface 1558.

The above-mentioned devices may be an independent electronic device, or may be a part of an independent electronic device. For example, in an embodiment, the devices may be an Integrated Circuit (IC) or a chip, in which the integrated circuit may be one IC or a collection of multiple ICs. The chip may include, but is not limited to, the following types: GPU (Graphics Processing Unit), CPU (Central Processing Unit), FPGA (field programmable gate array, Programmable logic array), DSP (Digital Signal Processor), ASIC (application specific integrated circuit), SoC (System on Chip), etc. The above integrated circuit or chip can be configured to perform executable instructions (or codes) to realize the above information input method. The executable instructions may be stored in the integrated circuit or chip, or may be obtained from other devices or apparatuses. For example, the integrated circuit or chip includes a processor, a memory, and an interface for communication with other devices. The executable instructions can be stored in the memory, and when the executable instructions are executed by the processor, any of the above information input methods is realized. Alternatively, the integrated circuit or chip can receive executable instructions through the interface and transmit them to the processor for execution, to realize any of the above information input methods.

In another embodiment, there is also provided a computer program product that includes a computer program executable by a programmable device, the computer program having a code portion for executing any the above information input methods when executed by the programmable device.

Other embodiments of the present invention may be conceivable for those skilled in the art after considering the specification and practicing the technical solutions disclosed herein. The present invention is intended to cover any variations, uses, or adaptive changes of the present invention. These variations, uses, or adaptive changes follow the general principles of the present invention and include common knowledge or conventional technical means in the technical field that are not disclosed in the present invention. The description and the embodiments are regarded as exemplary only, and the true scope of the present invention is indicated by the appended claims.

It should be understood that the present invention is not limited to the particular structures described above and shown in the drawings, and various modifications and changes can be made without departing from the scope of the present invention. The scope of the present invention is only limited by the appended claims.

## Claims

1. An information input method applied to a touch display screen (1), comprising:
acquiring a first signal sent by a stylus, wherein the first signal carries first status information, and the first status information is configured to indicate whether a tip of the stylus is in contact with the touch display screen (S110); and
displaying a stroke on the touch display screen under a condition that the first status information indicates a first status, the first status being that the tip of the stylus is in a contact status with the touch display screen (S120).

2. The information input method according to claim 1, wherein displaying a stroke on the touch display screen under a condition that the first status information indicates a first status (S120) comprises:
displaying the stroke on the touch display screen according to a preset pressure value when it is detected that the first status information indicates the first status (S1201).

3. The information input method according to claim 1, wherein displaying a stroke on the touch display screen under a condition that the first status information indicates a first status (S120) comprises:
displaying the stroke on the touch display screen, when a number of information frames of the first status information indicating the first status in the first signal is greater than or equal to a frame number threshold (S 1202).

4. The information input method according to claim 1, further comprising:
the information input method further comprises: acquiring a stylus sensing amount according to the first signal, wherein the stylus sensing amount is configured to reflect a degree of contact between the stylus and the touch display screen (S1203); and
wherein displaying a stroke on the touch display screen under a condition that the first status information indicates a first status (S120) comprises: displaying the stroke on the touch display screen when the stylus sensing amount is greater than or equal to a sensing threshold, under the condition that the first status information indicates the first status (S1204).

5. The information input method according to claim 1, further comprising:
acquiring a second signal sent by the stylus, wherein the second signal carries a tip pressure value of the stylus (S210); and
displaying the stroke on the touch display screen according to the first signal and the second signal (S220).

6. The information input method according to claim 5, wherein displaying the stroke on the touch display screen according to the first signal and the second signal (S220) comprises:
displaying the stroke on the touch display screen and determining a width of the stroke according to the tip pressure value, under a condition that the tip pressure value is greater than zero (S2201).

7. The information input method according to claim 6, wherein displaying the stroke on the touch display screen under a condition that the tip pressure value is greater than zero (S220) comprises:
stopping displaying the stroke on the touch display screen when a number of information frames of the first status information indicating a second status in the first signal is greater than or equal to a frame number threshold, under the condition that the tip pressure value is greater than zero (S2202).

8. The information input method according to claim 4, wherein displaying the stroke on the touch display screen under the condition that the first status information indicates the first status (S120) comprises:
stopping displaying the stroke on the touch display screen when the stylus sensing amount is greater than or equal to the sensing threshold, under the condition that the first status information indicates the first status (S1205).

9. The information input method according to any one of claims 1 to 8, wherein the first status information indicates pressure status information of the tip of the stylus.

10. The information input method according to claim 1, wherein:
the first signal further comprises second status information that indicates coordinate coding information of the stylus; and
before displaying the stroke on the touch display screen (S 120), the information input method further comprises:
acquiring the coordinate coding information in the first signal (S 10);
acquiring a contact coordinate of the stylus on the touch display screen according to the coordinate coding information (S20);
stopping displaying the stroke on the touch display screen in the event of failure in acquiring the contact coordinate (S30); and
performing an operation of displaying the stroke on the touch display screen under the condition that the first status information indicates the first status, in the event of successful acquisition of the contact coordinate (S40).

11. An information input method applied to a stylus (2), comprising:
entering an activated state in response to a signal sent by a touch display screen (S310);
sending a first signal, wherein the first signal comprises first status information, and the first status information is configured to indicate whether a tip of the stylus is in contact with the touch display screen (S320); and
sending a second signal, wherein the second signal carries a tip pressure value of the stylus, wherein the first signal and the second signal are configured to instruct the touch display screen to display a stroke (S330).

12. The information input method according to claim 11, wherein the second signal is transmitted by short-range wireless communication.

13. A touch display screen device, comprising:
a touch display screen (1);
a memory having a computer program stored therein; and
a processor configured to execute the computer program in the memory, to realize the information input method according to any one of claims 1 to 10.

14. A stylus (2), comprising:
a memory having a computer program stored therein; and
a processor configured to execute the computer program in the memory, to realize the information input method according to any one of claims 11 to 12.

15. A computer-readable storage medium having stored therein program instructions that, when executed by a processor, realize the information input method according to any one of claims 1 to 10, or realize the information input method according to any one of claims 11 to 12.
